# EUROPÄISCHE PATENTSCHRIFT

(11) **EP 2 681 479 B1**
(45) Veröffentlichungstag und Bekanntmachung des Hinweises auf die Patenterteilung: **07.10.2015**
(21) Anmeldenummer: 12702560.9
(22) Anmeldetag: 09.02.2012
(51) Int. Cl.: F16L 23/026

(54) **HALTERUNG FÜR EINE ROHRLEITUNG**
MOUNTING FOR A PIPELINE
FIXATION POUR UNE CONDUITE TUBULAIRE

(30) Priorität: 01.03.2011 DE 102011000982
(43) Veröffentlichungstag der Anmeldung: 08.01.2014
(73) Patentinhaber: ContiTech Techno-Chemie GmbH, 61184 Karben (DE)
(72) Erfinder: PAUST, Marcus, 61130 Nidderau (DE); FOIK, Jürgen, 61352 Bad Homburg (DE); HAHN, Michael, 76857 Ramberg (DE)
(74) Vertreter: Preusser, Andrea
(86) Internationale Anmeldenummer: PCT/EP2012/052159
(87) Internationale Veröffentlichungsnummer: WO 2012/116879

(56) Entgegenhaltungen:
- EP-A1- 1 712 826
- DE-A1-102007 051 109
- JP-A- 7 103 374
- US-A- 4 832 383
- US-A- 5 018 769

## Beschreibung

Die Erfindung betrifft eine Anschlussvorrichtung zum Verbinden eines Endes einer Fluidleitung mit einem eine Durchflussöffnung aufweisenden, mit Fluid zu versorgenden Aggregat, insbesondere eines Kraftfahrzeugaggregat, gemäß dem Oberbegriff des Anspruchs 1.

In Kraftfahrzeugen werden Rohre, Schläuche und Leitungen zur Führung von verschiedenen Fluiden zwischen den einzelnen Aggregaten des Motors eingesetzt. Zur Verbindung dieser Leitungen mit den Aggregaten kommen Verbindungsanordnungen zum Einsatz, die z.B. einen Stutzen und einen Flansch aufweisen können, die z.B. mittels einer Lötverbindung stoffschlüssig miteinander verbunden sind. Derartige Anschlussvorrichtungen sind z.B. aus EP 1 712 826 bekannt.

Oftmals besteht die Anforderung an eine derartige Verbindungsanordnung, dass der Steckbereich von Stutzen und Flansch frei von Lotrückständen bzw. Lotanhäufungen sein soll. Vermieden wird dies oftmals durch den Einsatz von speziellen Lotstopmitteln oder aufwendigen Konstruktionen, die den Übergang von Stutzen zu Flansch im Steckbereich meiden. Eine weitere kostenintensive Methode ist die Entfernung von Lotrückstanden mittels spanender Nachbearbeitung.

Nachteilig ist hierbei, dass diese Maßnahmen z.B. durch den Materialeinsatz der Lotstopmittel bzw. ihren zeitlichen Aufwand Kosten verursachen.

Die Aufgabe der vorliegenden Erfindung ist es, eine Anschlussvorrichtung der eingangs beschriebenen Art bereit zu stellen, die Lotrückstände bzw. Lotanhäufungen auf eine einfachere Art und Weise vermeidet als die bekannten Maßnahmen.

Die Aufgabe wird erfindungsgemäß durch die Merkmale des kennzeichnenden Teils des Anspruchs 1 gelöst. Vorteilhafte Weiterbildungen sind in den Unteransprüchen beschrieben.

Der Erfindung liegt die Erkenntnis zugrunde, dass es sich in der Praxis zeigt, dass unabhängig vom eingesetzten Lötverfahren die Lötergebniss auf Grund der genannten Einflussgrößen Schwankungen (nicht durchgelötet oder Lotüberschuß) unterliegen. Durch die Vertiefung des Flansches, die vorzugsweise als eingeprägte Rille im Flansch ausgebildet ist, verläuft das Lot beim Löten nicht mehr undefiniert auf den Flansch. Überschüssiges Lot sammelt sich in der Rille und fließt aufgrund der Geometrie der Rille nicht mehr aus dieser heraus. Die Kapillarwirkung reißt dabei in der Rille ab.

Die Vertiefung führt somit dazu, dass der Steckbereich des Flansches frei von Lot bleibt. Außerdem wird eine positive Wirkung dahingehend erzielt, dass wesentlich weniger überschüssiges Lot auf den Steckbereich des Stutzens läuft. Dies kann durch zusätzliches Einbringen einer Nut im Stutzen gänzlich verhindert werden.

Zusätzlich wird der Lötprozess dahingehend optimiert, dass die Anzahl der nicht vollständig gelöteten Fügepartner, d.h. Stutzen und Flansche, merklich reduziert werden kann, da auf Grund der Rille entsprechend mit mehr Lot und einer längeren Lötzeit während des Lötprozesses gearbeitet werden kann.

Die vorliegende Konstruktion stellt eine kostengünstige Alternative zu den bekannten Maßnahmen dar, die gleichzeitig durch den Einsatz einer Rille im Flansch verhindert, dass das Lot auf den Steckbereich des Flansches übergeht.

Zur Herstellung der Verbindungsanordnung wird zunächst der Stutzen mit dem Flansch mittels Presspassung fixiert. Die Presspassung ist notwendig, um die Teile für den nachfolgenden Lötprozess richtig zu orientieren.

Im nächsten Schritt werden die Einzelteile mittels Lötung stoffschlüssig gefügt. Dazu stehen verschieden Lötverfahren zur Verfügung. Die Teile können entweder mittels Ofen- oder Induktionslötung stoffschlüssig gefügt werden. Prinzipiell kann bei allen Lötverfahren das Lot pastenförmig vorbeschichtet auf den einzelnen Bauteilen oder als Festkörper zugeführt werden.

Ein Ausführungsbeispiel und weitere Vorteile der Erfindung werden nachstehend im Zusammenhang mit den folgenden Figuren erläutert. Darin zeigt:
- Fig. 1: eine schematische Draufsicht auf einen Flansch; und
- Fig. 2: einen Schnitt durch Flansch und Stutzen.

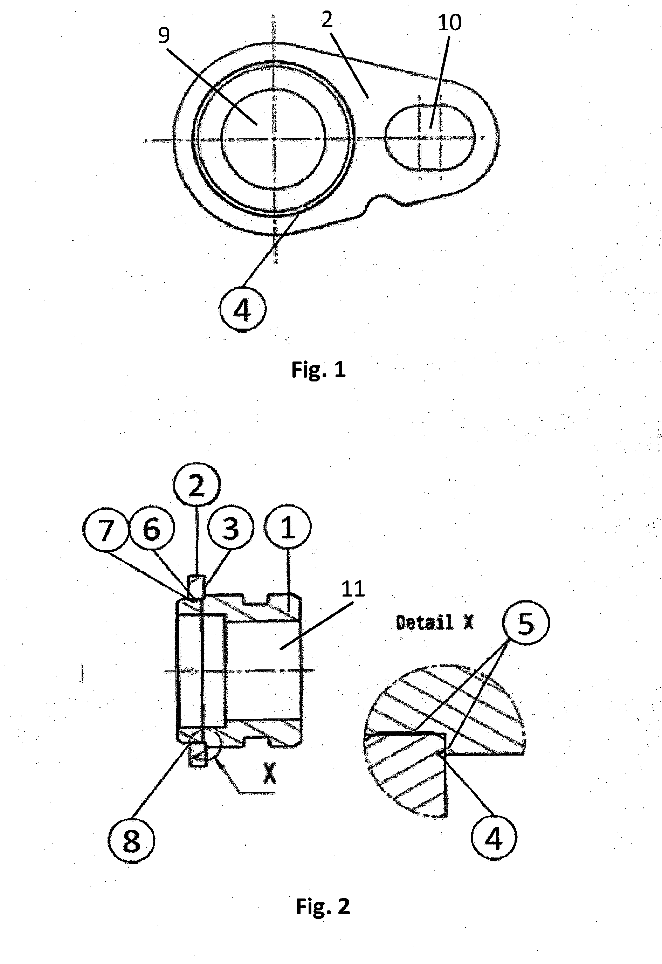

Fig. 1 zeigt eine schematische Draufsicht auf einen Flansch 2. Der Flansch 2 weist eine erste Öffnung 9 zur Aufnahme eines Stutzens 1 (vgl. Fig. 2) auf. Entsprechend ist der Innendurchmesser der ersten Öffnung 9 (Innenbohrung 6, vgl. Fig. 2) zumindest geringfügig radial größer (Fügedurchmesser 7, vgl. Fig. 2) als der Außendurchmesser des Stutzens 1 in dem Bereich 3, in dem der Flansch 2 auf den Stutzen 1 aufgesteckt werden soll (Steckbereich 3).

Der Flansch 2 weist ferner eine zweite Öffnung 10 auf. Mittels der zweiten Öffnung 10 kann der Flansch 2 und damit auch die gesamte Haltevorrichtung an einem Aggregat z.B. angeschraubt werden, um eine feste und fluiddichte Verbindung zwischen dem Aggregat und einer Fluidleitung herzustellen.

Der Flansch 2 weist erfindungsgemäß eine Vertiefung 4 auf, die vorzugsweise als eingeprägte Rille 4 ausgeführt ist. Diese Rille 4 verläuft radial um die erste Öffnung 9 herum auf einer Oberfläche des Flansches 2. Die Rille 4 ist derart ausgestaltet und auf dem Flansch 2 angeordnet, dass Lot sich in dieser sammeln kann, wenn der Flansch 2 und der Stutzen 1 mittels Löten verbunden werden.

Fig. 2 zeigt einen Schnitt durch Flansch 2 und Stutzen 1. Dabei ist der Flansch 2 im Steckbereich 3 auf den Stutzen 1 aufgesteckt und mittels Lötung 5 mit diesem stoffschlüssig verbunden, siehe auch Detail X der Position 8 der Fig. 2.

Die Herstellung der Verbindung zwischen Flansch 2 und Stutzen 1 kann folgendermaßen durchgeführt werden:
Im ersten Schritt werden Stutzen 1 und Flansch 2 mittels Pressverfahren vorgefügt. Dazu wird der Flansch im Bereich der Innenbohrung 6 mit einer Presse auf den Fügedurchmesser 7 des Stutzen fixiert.

Im zweiten Schritt werden die Fügepartner (1, 2) durch den Lötprozess stoffschlüssig gefügt. Auf Grund der Anforderung, dass der Steckbereich 3 frei von Lotrückständen und Lotanhäufüngen sein muss, ist es nicht möglich, Lot im Steckbereich zuzuführen oder durch Vorbeschichtung aufzubringen, vgl. Detail X der Fig. 2. Dies würde zwangsläufig zu Lotrückständen im Steckbereich führen. Die Aufbringung des Lotes ist somit zwingend auf der dem Steckbereich abgewandten Seite 6 durchzuführen.

Als Lötverfahren sind z.B. das Ofenlöten und das Induktionslöten bekannt, die nachfolgenden allgemein beschrieben werden:
Beim klassischen Ofenlöten werden die Fügepartner 1, 2 unter Schutzgas-Athmosphäre verlötet. Die Löttemperatur ist dabei vom verwendeten Lotwerkstoff abhängig. Die Lötzeit ist vom Volumen, Geometrie, Masse sowie dem eingesetzten Lotwerkstoff abhängig. Der Lotauftrag erfolgt hierbei mittels Paste oder Festkörperlot (Ring) an Position 8.

In der Regel wird bei dieser Konstruktion in Kombination mit dem Ofenlöten Lotpaste verwendet. Die Bepastung mit Lotpaste erfolgt mit pneumatischer Dosiereinheit oder per Schneckenförderer-Dosiereinheit. Anschließend werden die Fügepartner 1, 2 am Anfang des Ofens auf ein Kettenförderband abgelegt. Das Kettenförderband fährt die beiden Fügepartner 1, 2 mit einer definierten Bandgeschwindigkeit durch die verschiedenen Heizund Kühlzonen des Ofens. In den Heizzonen werden die Fügepartner stoffschlüssig gefügt und anschließend in einem Kühltunnel abgekühlt. Am Ende des Ofens können die verlöteten Bauteile vom Kettenförderband entnommen werden.

Aufgrund der Prozesseinflußgrößen wie Lötzeit, Volumen, Geometrie und Menge des eingesetzten Lotwerkstoffes kann es vorkommen, dass die Fügepartner nicht durchgelötet sind, optimal verlötet sind oder optimal verlötet sind wobei überschüssiges Lot sich undefiniert auf dem Steckbereich des Stutzens 1 oder auf dem Flansch 2 absetzt.

Beim Induktionslöten werden die Fügepartner 1, 2 unter Schutzgas-Athmosphäre verlötet. Die Löttemperatur ist dabei vom verwendeten Lotwerkstoff abhängig. Die Lötzeit ist vom Volumen, Geometrie, Masse sowie dem eingesetzten Lotwerkstoff abhängig. Der Lötauftrag erfolgt hierbei mittels Paste oder Festkörperlot (Draht) an Position 8.

Die Bepastung erfolgt mit pneumatischer Dosiereinheit oder per Schneckenförderer-Dosiereinheit. Die Zuführung des Festkörperlotes erfolgt entweder über eine Drahtzuführung oder kann als Lotformteil (Lotring) zugeführt werden. Die vorgefügten Fügepartner 1, 2 werden beim Induktionslöten in entsprechende Aufnahmen (Vorrichtung) eingelegt. Die Fügepartner 1, 2 werden dabei durch Induktionserwärmung stoffschlüssig gefügt. Nach dem Erwärmen (Verlöten) werden die Fügepartner 1, 2 mittels Schutzgas abgekühlt und können aus der Aufnahme (Vorrichtung) entnommen werden.

Aufgrund der Prozesseinflußgrößen wie Lötzeit, Volumen, Geometrie und Menge des eingesetzten Lotwerkstoffes kann es vorkommen, dass die Fügepartner nicht durchgelötet sind, optimal verlötet sind oder optimal verlötet sind wobei überschüssiges Lot sich undefiniert auf dem Steckbereich des Stutzens 1 oder auf dem Flansch 2 absetzt.

### Bezugszeichenliste

### (Teil der Beschreibung)

- 1: Stutzen
- 2: Flansch
- 3: Steckbereich
- 4: Rille
- 5: Lötung
- 6: Innenbohrung
- 7: Fügedurchmesser
- 8: Position
- 9: erste Öffnung des Flansches 2 zur Aufnahme des Stutzens 1
- 10: zweite Öffnung des Flansches 2 zur Befestigung am Aggregat
- 11: Durchgangsöffnung des Stutzens 1

## Patentansprüche

1. Anschlussvorrichtung zum Verbinden eines Endes einer Fluidleitung mit einem Aggregat, insbesondere einem Kraftfahrzeugaggregat, die
- einen Stutzen (1) mit einer Durchgangsöffnung (11) zur Aufnahme der Fluidleitung an einem Ende der Durchgangsöffnung (11),
- und einen Flansch (2) mit einer ersten Öffnung (9) zur Aufnahme des Stutzens (1) und einer zweiten Öffnung (10) zur Befestigung an dem Aggregat aufweist, wobei
- der Stutzen (1) in die erste Öffnung (9) eingeführt und mit dem Flansch (2) stoffschlüssig mittels einer Lötverbindung verbunden ist, und
- der Flansch (2) einen Steckbereich (3) und eine von dem Steckbereich abgewandte Innenbohrung (6) aufweist,
**dadurch gekennzeichnet,**
**dass** der Flansch (2) auf der dem Stutzen in Aufsteckrichtung zugewandten Oberfläche des Steckbereiches (3) im Bereich der stoffschlüssigen Verbindung eine in Umfangsrichtung verlaufende Vertiefung (4) aufweist, die radial um die erste Öffnung (9) herum verläuft, und dass das Lot zur Herstellung der Lötverbindung auf der dem Steckbereich (3) abgewandten Innenbohrung (6) aufgebracht ist.

2. Anschlussvorrichtung nach Anspruch 1,
wobei die in Umfangsrichtung verlaufende Vertiefung (4) zur Aufnahme von überschüssigem Lot aus der Lötverbindung vorgesehen ist.

## Claims

1. Connection device for connecting an end of a fluid line to an assembly, in particular a motor vehicle assembly, which device has
- a stub (1) with a through opening (11) for receiving the fluid line at one end of the through opening (11),
- and a flange (2) with a first opening (9) for receiving the stub (1) and a second opening (10) for fastening to the assembly, wherein
- the stub (1) is introduced into the first opening (9) and is connected to the flange (2) in a material-to-material manner by means of a soldered connection, and
- the flange (2) has a plug-in region (3) and an inner bore (6) which faces away from the plug-in region,
**characterized**
- **in that**, on that surface of the plug-in region (3) which faces the stub in the plug-in direction, the flange (2) has a depression (4) which runs in the circumferential direction in the region of the integrally joined connection, which depression (4) runs radially around the first opening (9), and in that the solder for producing the soldered connection is applied on the inner bore (6) which faces away from the plug-in region (3).

2. Connection device according to Claim 1, the depression (4) which runs in the circumferential direction being provided for receiving excess solder from the soldered connection.

## Revendications

1. Dispositif de raccordement pour le raccordement d'une extrémité d'une conduite fluidique à un groupe, en particulier un groupe d'un véhicule automobile, le dispositif de raccordement présentant :
- une tubulure (1) avec une ouverture de passage (11) pour recevoir la conduite fluidique au niveau d'une extrémité de l'ouverture de passage (11),
- et une bride (2) avec une première ouverture (9) pour recevoir la tubulure (1) et une deuxième ouverture (10) pour la fixation au groupe,
- la tubulure (1) étant introduite dans la première ouverture (9) et étant raccordée à la bride (2) par liaison de matière au moyen d'une connexion brasée, et
- la bride (2) présentant une région d'enfichage (3) et un alésage interne (6) opposé à la région d'enfichage,
**caractérisé en ce que**
la bride (2) présente, sur la surface de la région d'enfichage (3) tournée vers la tubulure dans la direction d'enfichage, dans la région de la connexion par liaison de matière, un renfoncement (4) s'étendant dans la direction périphérique, lequel s'étend radialement autour de la première ouverture (9), et **en ce que** la matière de brasage est appliquée, pour réaliser la connexion brasée, sur l'alésage interne (6) opposé à la région d'enfichage (3).

2. Dispositif de raccordement selon la revendication 1,
dans lequel le renfoncement (4) s'étendant dans la direction périphérique est prévu pour recevoir la matière de brasage en excès provenant de la connexion brasée.
